# FASCICULE DE BREVET EUROPEEN

(11) **EP 2 428 401 B1**
(45) Date de publication et mention de la délivrance du brevet: **13.11.2013**
(21) Numéro de dépôt: 11180291.4
(22) Date de dépôt: 06.09.2011
(51) Int. Cl.: B60R 3/02, B60R 3/00

(54) **Dispositif de commande d'une marche escamotable d'accès à une cabine d'un véhicule**
Steuervorrichtung für ein einziehbares Trittbrett eines Zugangs zu einem Fahrerhaus eines Fahrzeugs
Device for controlling a retractable step for accessing a vehicle cab

(30) Priorité: 10.09.2010 FR 1057195
(43) Date de publication de la demande: 14.03.2012
(73) Titulaire: Mécaplast, 98014 Monaco (MC)
(72) Inventeur: Huguet, Guillaume, 01250 CHAVANNES SUR SURAN (FR); Mathy, Guillaume, 01370 TREFFORT CUISIAT (FR); Reichheld, Frédéric, 06500 MENTON (FR)
(74) Mandataire: Delorme, Nicolas

(56) Documents cités:
- EP-A2- 1 213 185
- DE-A1- 19 642 549
- GB-A- 506 792
- US-A- 5 064 022
- US-A- 5 199 731
- US-A- 5 538 265

## Description

La présente demande de brevet concerne un dispositif de commande d'une marche escamotable d'accès à une cabine de véhicule industriel.

L'architecture de certains véhicules impose que la cabine de conduite se trouve en hauteur. L'accès à la cabine se fait alors grâce à des moyens d'accès à bord de type marchepied, échelle, escaliers comportant un ou plusieurs échelons qui permettent à un utilisateur - conducteur ou passager - de rejoindre la cabine.

Les véhicules concernés sont, de manière générale, les véhicules industriels pour lesquels la cabine est placée au-dessus du moteur et peut ainsi se trouver à une hauteur de l'ordre de 1,20 m à 1,50 m au-dessus du sol. Les véhicules agricoles et de travaux publics sont également concernés par cette problématique d'accès à bord.

On a déjà envisagé de doter ces véhicules de moyens d'accès à bord escamotables. Par escamotable, on entend que les moyens d'accès à bord sont déployés lors de l'accès à bord du conducteur ou du passager et que les moyens d'accès à bords sont rétractés et occultés le reste du temps.

Le fait de rendre escamotable le marchepied présente de nombreux avantages opérationnels.

Sur un plan aérodynamique, la présence d'un marchepied crée une perturbation et un décollement de la veine gazeuse qui s'écoule sur le véhicule lors de son déplacement. Cela augmente la traînée aérodynamique et, par conséquent, la consommation. En rendant escamotable les moyens d'accès à bord, il est possible de donner au véhicule un aspect lisse qui contribue à une bonne pénétration dans l'air du véhicule. Il s'agit d'un aspect important pour les véhicules amenés à circuler sur de longues distances.

Sur un plan de sécurisation de l'accès à bord, la rétraction et l'occultation du marchepied permettent de prévenir l'accès à bord par des personnes non autorisées.

Les contraintes sont cependant nombreuses et ont limité la diffusion des marchepieds escamotables.

En effet, pour rendre escamotable un marchepied, il est nécessaire d'utiliser une forme d'énergie qui peut être pneumatique, électrique, hydraulique ou éventuellement manuelle pour basculer d'une position rétractée vers une position déployée et inversement. Or, il importe que le déploiement des moyens d'accès à bord puisse s'opérer automatiquement y compris en cas de panne du véhicule ou d'évacuation urgente du véhicule. Pour des raisons de sécurité élémentaire, il convient qu'à tout moment, le conducteur puisse s'extraire de la cabine.

De plus, il importe que les moyens escamotables d'accès à bord soient peu encombrants et, de manière générale, n'utilisent pas de composants - moteur, vérins ... - coûteux.

Ainsi, le document DE19642549 montre un système de marchepied escamotable possédant une cinématique complexe, qui fonctionne avec l'ouverture de la porte de cabine. Un inconvénient de ce type de solution technique est d'engendrer des efforts importants lors de l'ouverture de la porte de cabine. De plus, la zone de marche pied est, de part sa position sur le véhicule, exposée aux chocs qui peuvent produire des déformations qui peuvent entrainer un blocage de la cinématique et de la porte.

Il apparaît donc qu'il existe des insuffisances dans le domaine des marchepieds escamotables.

Dans ce contexte technique, un but de l'invention est de proposer un dispositif de commande de marche escamotable qui présente une structure simple et peu coûteuse.

La présente invention concerne un dispositif de commande d'une marche escamotable d'accès à une cabine d'un véhicule, ladite marche escamotable comprenant un axe de rotation par rapport au véhicule de manière à autoriser le pivotement de la marche escamotable d'une position de fermeture rétractée à une position d'ouverture déployée.

Le dispositif comprend, de plus, un moteur électrique couplé à l'axe de rotation de la marche escamotable par un train épicycloïdal permettant le découplage cinématique du moteur et de la marche escamotable lors de l'ouverture de la marche escamotable et permettant le couplage cinématique du moteur et de la marche escamotable pour la fermeture de la marche escamotable.

Ainsi, l'invention propose un dispositif de commande d'une marche escamotable qui assure la remontée de cette dernière et qui autorise l'ouverture de cette dernière, par exemple, sous l'effet de la gravité ou de l'assistance d'un ressort. Un point avantageux de l'invention tient dans le fait que la descente de la marche escamotable peut être réalisée sans apport d'énergie, tandis que le dispositif de commande effectue la fermeture de la marche escamotable.

Dans une forme de réalisation, le train épicycloïdal comprend un planétaire libre en rotation et une couronne dentée entre lesquels est interposé un satellite et un porte satellite relié à la marche escamotable et le moteur est relié à un pignon denté qui s'engage dans la couronne dentée.

Selon une disposition pratique de l'invention, le dispositif comprend un moyen de blocage conçu pour bloquer un composant du train épicycloïdal appartenant au groupe comprenant le planétaire et la couronne et permettre la transmission de rotation du moteur à la marche escamotable au travers du train épicycloïdal.

Selon une possibilité, le moyen de blocage comprend un actuateur électromagnétique qui commande un doigt de verrouillage pouvant venir en appui contre le planétaire ou la couronne pour en interdire la rotation.

Selon une autre possibilité, le moyen de blocage comprend une ventouse magnétique conçue pour venir bloquer la rotation du planétaire ou de la couronne.

Pour rattraper les jeux fonctionnels entre les composants formant le train épicycloïdal, le dispositif comprend un ressort en spirale dont une extrémité est fixée sur le dispositif et dont l'autre extrémité est fixée sur l'axe de la marche.

Il est également prévu que le dispositif comprenne un ralentisseur à graisse lié à un pignon qui est engrené dans la couronne ou dans le planétaire.

Le dispositif est compact et peut comprendre un boîtier fermé par un couvercle dans lequel le train épicycloïdal ainsi que le moteur sont logés. Le dispositif, selon l'invention peut ainsi prendre la forme d'un module indépendant.

Dans une forme de réalisation, l'axe de rotation de la marche escamotable est constitué par deux tourillons engagés dans des perçages ménagés dans le marchepied.

Dans une forme de réalisation, les moyens de verrouillage comprennent un pêne conçu pour s'engager dans une gâche ménagée dans la marche escamotable.

Selon un autre aspect, l'invention concerne un module de commande qui comprend une marche escamotable et un dispositif tel que précédemment décrit permettant de faire pivoter la marche escamotable de sa position d'ouverture vers sa position de fermeture et des moyens de verrouillage de la marche escamotable en position de fermeture.

Au plan pratique, cette disposition s'avère particulièrement avantageuse puisque l'invention peut ainsi être implémentée sous forme d'option choisie par un utilisateur ou éventuellement comme équipement de seconde monte prêt à monter. Ce module peut ainsi former un sous ensemble fonctionnel qui peut être rapporté et fixé sur le châssis.

Pour accompagner l'action de la gravité qui fait descendre la marche escamotable vers la position d'ouverture, il est prévu que la dispositif comprenne des moyens d'assistance à l'ouverture de la marche escamotable. De manière concrète, les moyens d'assistance à l'ouverture de la marche comprennent un ressort qui sollicite la marche escamotable dans la direction de son ouverture.

Selon un autre aspect, l'invention concerne également un véhicule comprenant une cabine dotée d'au moins une porte et un marchepied pour accéder à la cabine, située au-dessous de la porte et le marchepied comprend au moins une marche escamotable commandée par un dispositif de commande, selon l'une des dispositions précédemment exposées.

Dans une autre forme de réalisation, le marchepied comprend une première marche escamotable commandée par un dispositif de commande tel que précédemment décrit et au moins une deuxième marche connectée mécaniquement à ladite première marche escamotable par un ensemble de bielles.

De façon avantageuse, le marchepied comprend au moins deux marches escamotables superposées, la marche escamotable inférieure présentant une profondeur supérieure à celle de la marche escamotable supérieure, ce qui permet de créer un escalier.

Pour sa bonne compréhension, l'invention est décrite en référence au dessin ci annexé représentant, à titre d'exemple non limitatif, une forme de réalisation du dispositif selon celle-ci.
Figures 1 et 2 montrent, en perspective, un marche pied escamotable d'accès à bord, respectivement, en position fermée et en position ouverte;

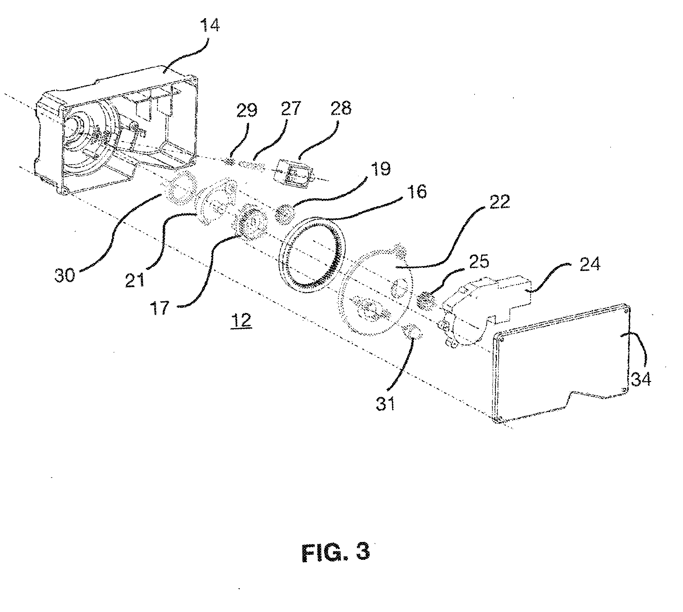

Figure 3 montre, en vue éclatée, le dispositif de commande selon l'invention ;

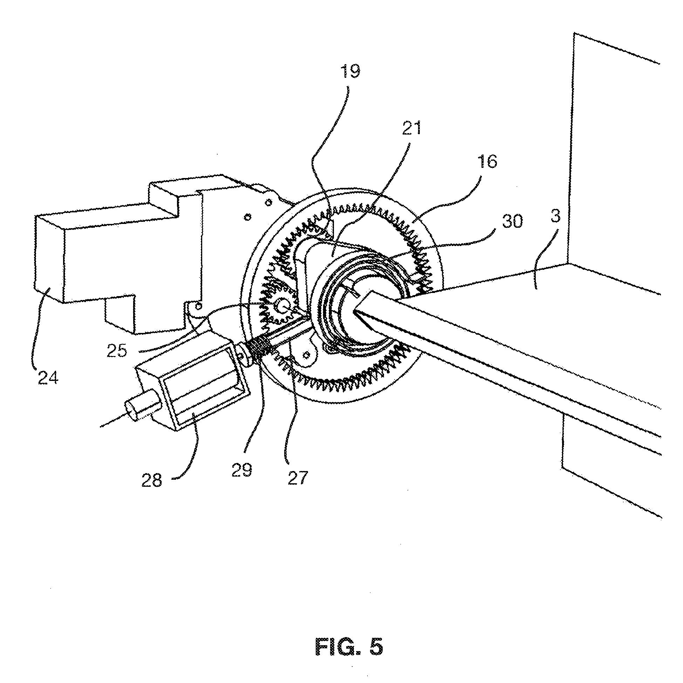

Figures 4 à 9 montrent le dispositif en cours de fonctionnement selon différents angles de vue ;
Figures 10 et 11 représentent une autre forme de réalisation de l'invention.

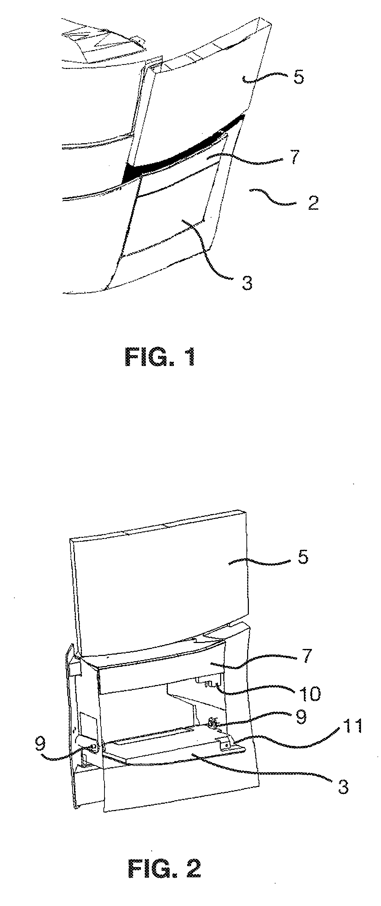

Figure 1 montre un marchepied 2 comprenant une marche escamotable 3 commandée par un dispositif selon l'invention. Au sens de la présente description, le marchepied 2 désigne l'entité fonctionnelle sur laquelle un utilisateur peut prendre appui pour accéder à une cabine d'un véhicule. De façon conventionnelle, le marchepied 2 est positionné en avant ou en arrière de la roue avant - généralement directrice - du véhicule et en dessous de la porte 5 qui donne accès à la cabine (non représentée).

Sur la plupart des véhicules, on trouve une disposition symétrique sur l'autre côté du véhicule.

Comme cela apparaît sur cette figure, le marchepied 2 se présente sous la forme d'un caisson qui embarque une marche escamotable 3 et une marche fixe 7. On verra plus loin qu'il est envisagé de doter le marchepied 2 de plusieurs marches escamotables.

La marche escamotable 3 est articulée sur un axe de rotation. En pratique, l'axe de rotation peut prendre la forme de deux tourillons 9 qui s'engagent dans des logements prévus à cet effet dans le caisson.

Grace à cet axe de rotation, la marche escamotable 3 peut ainsi pivoter entre une position déployée ou une position d'ouverture, illustrée à la figure 2. Dans cette position, la marche escamotable 3 est sensiblement perpendiculaire au caisson et est donc parallèle au sol. Dans sa position rétractée ou position de fermeture, illustrée à la figure 1, dans laquelle la marche vient fermer le caisson et est donc perpendiculaire au sol. La figure 1 illustre bien l'aspect lisse du marchepied 2 lorsque la marche escamotable 3 est en position de fermeture. La marche escamotable 3 affleure à la surface du caisson formant le marchepied 2 sans qu'une aspérité ne dépasse et ne vienne donc perturber l'écoulement du flux d'air. On peut également apprécier le fait que l'absence de toute aspérité sur le marchepied 2 rend difficile l'accès à la cabine par une personne non autorisée, puisque le marchepied n'offre aucun appui.

La marche escamotable 3 étant mobile en rotation comme cela a été expliqué, il convient d'assurer l'immobilisation de celle-ci en position de fermeture.

Pour cela, il est prévu un pêne 10 qui entre dans une gâche 11 prévue à cet effet dans la marche escamotable 3. Dans l'exemple représenté, le pêne 10 est logé dans la marche fixe 7 et, de façon avantageuse, le pêne 10 peut être commandé directement par le système de verrouillage de la porte 5, de sorte que lorsque la porte 5 est ouverte, le pêne 10 se rétracte et cesse son action de retenue de la marche escamotable 3.

La marche escamotable 3 s'ouvre alors par l'effet de la gravité. Pour assurer l'ouverture de la marche escamotable 3, il est également envisagé de placer un ressort sur l'axe de rotation de la marche escamotable 3, le ressort agissant dans le sens de l'ouverture.

On peut apprécier que l'ouverture de la marche escamotable 3 se fait de manière purement mécanique sans apport d'énergie pneumatique, hydraulique ou électrique.

La remontée de la marche escamotable 3 se fait grâce à un dispositif de remontée original.

En effet, il est prévu d'équiper l'axe de rotation de la marche escamotable 3 d'un mécanisme qui est débrayé lors de l'ouverture de la marche escamotable 3 et qui est embrayé lors de la remontée de la marche escamotable 3 vers sa position rétractée.

Dans le cadre de l'invention, la marche escamotable 3 reçoit un dispositif de remontée qui est doté d'un train épicycloïdal 12 ; le train épicycloïdal 12 est positionné sur l'axe de la marche escamotable 3.

Le train épicycloïdal 12 est logé dans un boîtier 14. Le boîtier 14 renferme une couronne 16 dentée, un planétaire 17 et un satellite 19 interposé entre la couronne 16 et la planétaire 17. Un porte satellite 21 assure la liaison entre le satellite 19 et le planétaire 17. Il est à noter que le planétaire 17 est libre en rotation tandis que le porte satellite 21 est relié à l'axe de la marche escamotable 3. Un flasque 22 assure la tenue de l'ensemble des composants du train épicycloïdal 12. De plus, on note la présence d'un moteur 24 électrique. Il s'agit d'un moteur de petite capacité qui, pour donner un ordre de dimension, pourrait, par exemple, être un moteur d'essuie-glaces. Sur l'axe de ce moteur 24, est engagé un pignon 25 denté. Le pignon 25 denté vient lui-même s'engrener sur la couronne 16 du train épicycloïdal 12.

On remarque que le dispositif est doté d'un doigt de verrouillage 27 monostable. Un actuateur 28 électromagnétique commande le doigt de verrouillage 27 sur une course qui lui permet de venir en appui contre le planétaire 17 pour en interdire la rotation. En pratique, le doigt de verrouillage 27 est maintenu en position rétractée par un ressort 29 qui est repoussé par l'actuateur 28, lorsqu'il convient de faire remonter la marche escamotable vers sa position de fermeture.

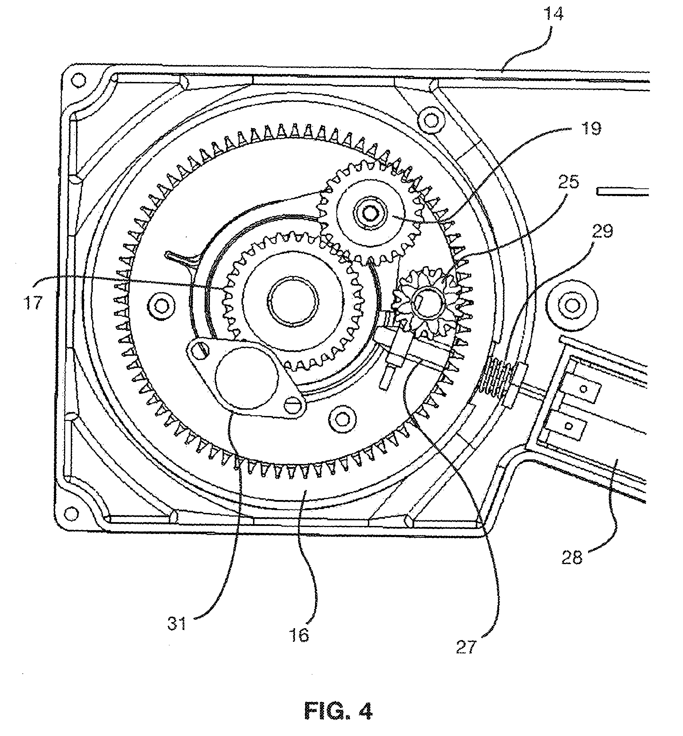

Le doigt de verrouillage 27 est mobile et peut ainsi venir en appui contre le planétaire 17. La figure 4 montre plus particulièrement le doigt de verrouillage 27 qui vient en appui contre le planétaire 17. Dans cette configuration, le planétaire 17 est bloqué.

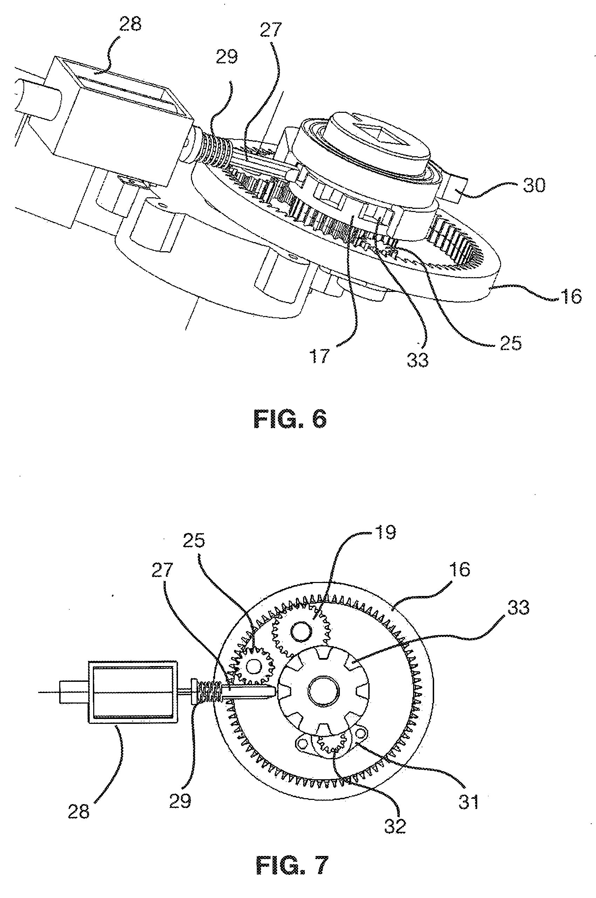

Les figures 6 et 7 font apparaitre la manière avec laquelle se produit l'accostage du doigt de verrouillage 27 sur le planétaire 17. On peut voir sur ces figures que le planétaire 27 est doté de cannelures 33 dans lesquelles le doigt de verrouillage 27 peut venir s'insérer. Pour faciliter l'engagement du doigt de verrouillage 27 dans le planétaire 17, l'extrémité de celui-ci est pourvue de biseaux.

Le dispositif comprend, de plus, un ressort 30 qui a pour fonction essentielle d'assurer le rattrapage de jeux fonctionnels qui existent entre les différents composants du dispositif.

Le dispositif comprend, de plus, un ralentisseur à graisse 31 qui est un composant connu en soi dont la fonction est de ralentir un mouvement de rotation dissipant une partie de l'énergie de la rotation dans un liquide visqueux. Le ralentisseur à graisse 31 est relié à un pignon 32 qui s'engrène dans le planétaire 17.

Un couvercle 34 se fixe sur le boîtier 14 pour le refermer. On peut noter au passage que le dispositif de remontée est extrêmement compact.

Lors de l'ouverture de la marche escamotable 3 telle qu'elle a décrite précédemment, le dispositif de remontée ne s'oppose pas à l'ouverture de la marche escamotable 3. La marche escamotable 3 pivote vers la position d'ouverture. Au cours de cette rotation, le porte satellite 21 tourne avec la marche escamotable 3 entraînant avec elle le satellite 19.

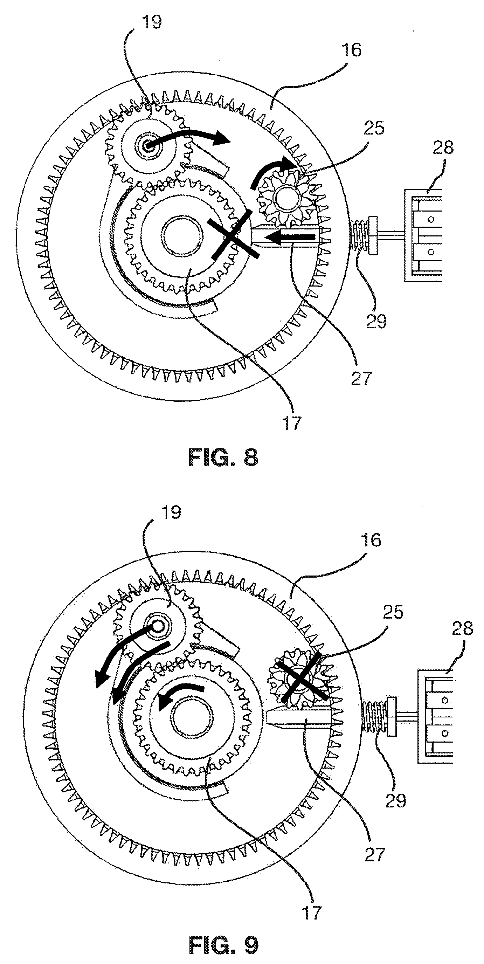

Pour effectuer la rotation de la marche escamotable 3 vers sa position de fermeture, le doigt de verrouillage 27 vient se mettre en appui contre le planétaire 17 et en interdit donc la rotation. Simultanément, le moteur 24 se met en action mettant en rotation le pignon 25. Le pignon 25, qui est engrené sur la couronne 16, fait donc tourner celle-ci. La rotation de la couronne 16 fait tourner le satellite 19 qui, simultanément, entraîne le porte satellite 21 et, donc, met en rotation la marche escamotable 3. La figure 8 illustre cet état ; sur cette figure, la croix qui barre le planétaire 17 représente le blocage par le doigt de verrouillage 27 tandis que les flèches représentent respectivement la rotation du pignon 25 et la rotation du satellite 19.

En fin de remontée de la marche, l'alimentation électrique de l'actuateur 28 est coupée, ce qui entraîne la rétraction du doigt de verrouillage 27. Le mécanisme de remontée est dans une configuration dans laquelle il ne s'oppose pas à l'ouverture de la marche escamotable 3.

La figure 9 montre le mécanisme dans cet état avec les mêmes conventions que celles de la figure 8.

Il est précisé que, en fin de rotation, la marche escamotable 3 vient se verrouiller en position de fermeture et le pêne de verrouillage 10 s'engage dans la gâche de la marche escamotable 3.

Dans un souci de préservation du mécanisme en cas d'utilisation anormale - cas, par exemple, d'une personne qui resterait debout sur la marche -, il est prévu un escamotage du doigt de verrouillage 27.

Dans d'autres formes de réalisation de l'invention, il peut être envisagé de réaliser le blocage du planétaire 17 par une ventouse magnétique à la place du doigt de verrouillage 27 décrit plus haut.

La fonction de rattrapage de jeu et d'assistance à l'ouverture pourrait être réalisée par un vérin à gaz en lieu et place du ressort spirale et du ralentisseur à graisse.

A l'intérieur du train épicycloïdal 12, il est concevable de verrouiller la couronne 16 et de prévoir l'entraînement du planétaire 17 par le moteur 24 électrique.

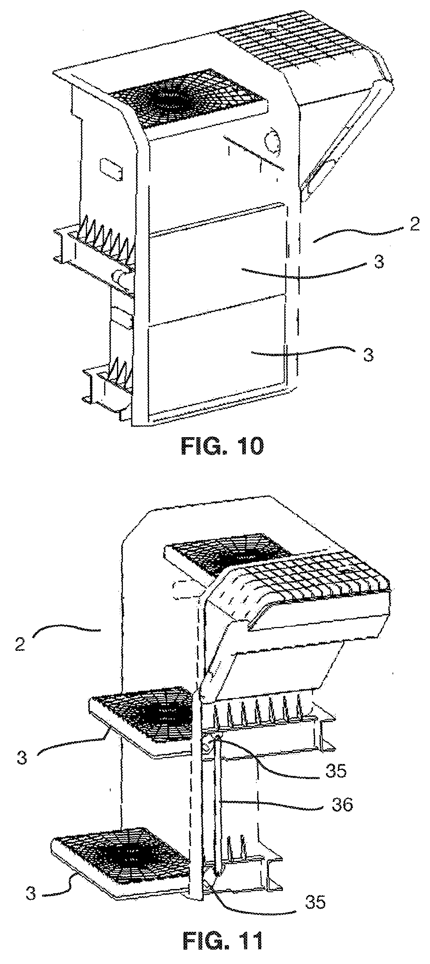

La présente description a été faite en référence à un dispositif de commande pour une marche. Dans le cas d'un véhicule qui le nécessite du fait de sa hauteur, il est possible de doter chaque marche d'un dispositif de commande tel que celui qui vient d'être décrit. Il est également possible de doter une unique marche avec un tel dispositif et de connecter cette marche aux autres marches mobiles du marchepied 2 par un système de tringlerie comme cela est montré aux figures 10 et 11. Les marches inférieure et supérieure sont reliées par un système de tringlerie comportant deux bielles 35 et une tringle 36.

Les figures 10 et 11 montrent une autre disposition intéressante de l'invention. Ces figures montrent un marchepied 2 dans lequel deux marches escamotables sont superposées. Cette forme de réalisation comporte une disposition intéressante qui réside dans le fait que la marche escamotable 3 inférieure présente une profondeur supérieure à celle de la marche escamotable 3 qui lui est adjacente. Ainsi, les deux marches escamotables forment un escalier lorsqu'elles sont déployées.

Dans ses différentes formes de réalisation, l'invention fournit ainsi un dispositif de commande d'une marche qui assure l'ouverture de la marche quand la porte du véhicule s'ouvre et ce indépendamment de tout apport en énergie électrique, pneumatique ou hydraulique.

En cas d'interruption d'alimentation, le véhicule peut cependant continuer à circuler avec la ou les marches d'accès en position ouverte.

Bien entendu, l'invention n'est pas limitée aux formes de réalisation décrites, à titre d'exemple non limitatif, mais elle en embrasse au contraire toutes les formes de réalisation.

## Revendications

1. Dispositif de commande d'une marche escamotable (3) d'accès à une cabine d'un véhicule, ladite marche escamotable (3) comprenant un axe de rotation par rapport au véhicule de marnière à autoriser le pivotement de la marche escamotable (3) d'une position de fermeture rétractée à une position d'ouverture déployée, **caractérisé en ce que** le dispositif comprend un moteur (24) électrique couplé à l'axe de rotation de la marche escamotable (3) par un train épicycloïdal (12) permettant le découplage cinématique du moteur (24) et de la marche escamotable (3) lors de l'ouverture de la marche escamotable et permettant le couplage cinématique du moteur (24) et de la marche escamotable (3) pour la fermeture de la marche escamotable (3).

2. Dispositif de commande selon la revendication 1, **caractérisé en ce que** le train épicycloïdal (12) comprend un planétaire (17) libre en rotation et une couronne (16) dentée entre lesquels est interposé un satellite (19), et un porte satellite (21) relié à la marche escamotable (3) et **en ce que** le moteur (24) est relié à un pignon (25) denté qui s'engage dans la couronne (16) dentée.

3. Dispositif selon la revendication 2, **caractérisé en ce que** le dispositif comprend un moyen de blocage conçu pour bloquer un composant du train épicycloïdal (12) appartenant au groupe comprenant le planétaire (17) et la couronne (16) et permettre la transmission de rotation du moteur (24) à la marche escamotable (3) au travers du train épicycloïdal (12).

4. Dispositif selon la revendication 3, **caractérisé en ce que** le moyen de blocage comprend un actuateur électromagnétique qui commande un doigt de verrouillage (27) pouvant venir en appui contre le planétaire (17) ou la couronne (16) pour en interdire la rotation.

5. Dispositif selon la revendication 3, **caractérisé en ce que** le moyen de blocage comprend une ventouse magnétique conçue pour venir bloquer la rotation du planétaire (17) ou de la couronne (16).

6. Dispositif selon l'une des revendications 1 à 5, **caractérisé en ce qu'**il comprend un ressort (30) en spirale dont une extrémité est fixée sur le dispositif et dont l'autre extrémité est fixée sur l'axe de la marche.

7. Dispositif selon l'une des revendications 1 à 6, **caractérisé en ce qu'**il comprend un ralentisseur à graisse (31) lié à un pignon (32) qui est engrené dans la couronne (16) ou dans le planétaire (17).

8. Dispositif selon l'une des revendications 1 à 7, **caractérisé en ce qu'**il comprend un boîtier (14) fermé par un couvercle dans lequel le train épicycloïdal (12) ainsi que le moteur (24) sont logés.

9. Dispositif selon l'une des revendications 1 à 8, **caractérisé en ce que** l'axe de rotation de la marche escamotable (3) est constitué par deux tourillons (9) engagés dans des perçages ménagés dans le marchepied (2).

10. Module de commande **caractérisé en ce que** qu'il comprend une marche escamotable (3) et un dispositif selon l'une des revendications 1 à 9 permettant de faire pivoter la marche escamotable (3) de sa position d'ouverture vers sa position de fermeture et des moyens de verrouillage de la marche escamotable (3) en position de fermeture.

11. Module de commande d'une marche escamotable (3) selon la revendication 10, **caractérisé en ce que** les moyens de verrouillage comprennent un pêne (10) conçu pour s'engager dans une gâche (11) ménagée dans la marche escamotable (3).

12. Module de commande d'une marche escamotable (3) selon la revendication 10 ou la revendication 11, **caractérisé en ce qu'**il comprend des moyens d'assistance à l'ouverture de la marche (3).

13. Module de commande d'une marche escamotable selon la revendication 12, **caractérisé en ce que** les moyens d'assistance à l'ouverture de la marche (3) comprennent un ressort qui sollicite la marche escamotable (3) dans la direction de son ouverture.

14. Véhicule comprenant une cabine dotée d'au moins une porte (5) et un marchepied (2) pour accéder à la cabine, située au-dessous de la porte (5) **caractérisé en ce que** le marchepied (2) comprend au moins une marche escamotable (3) commandée par un dispositif de commande selon l'une des revendications 1 à 9.

15. Véhicule selon la revendication 10, **caractérisé en ce que** le marchepied comprend une première marche escamotable commandée par un dispositif selon l'une des revendications 1 à 9 et au moins une deuxième marche connectée mécaniquement à ladite première marche escamotable par un ensemble de bielles.

16. Véhicule selon la revendication 15, **caractérisé en ce que** le marchepied (2) comprend au moins deux marches escamotables superposées, la marche escamotable inférieure présentant une profondeur supérieure à celle de la marche escamotable supérieure.

## Patentansprüche

1. Steuervorrichtung eines einziehbaren Trittbretts (3) eines Zugangs zu einem Fahrerhaus eines Fahrzeugs, wobei das einziehbare Trittbrett (3) eine Rotationsachse im Verhältnis zum Fahrzeug derart umfasst, um das Schwenken des einziehbaren Trittbretts (3) von einer eingezogenen Verschlussstellung in eine ausgefahrene geöffnete Stellung zu erlauben, **dadurch gekennzeichnet, dass** die Vorrichtung einen Elektromotor (24) umfasst, der an die Rotationsachse des einziehbaren Trittbretts (3) durch einen Planetengetriebezug (12) gekoppelt ist, der die kinematische Entkoppelung des Motors (24) und des einziehbaren Trittbretts (3) beim Öffnen des einziehbaren Trittbretts erlaubt und die kinematische Kopplung des Motors (24) und des einziehbaren Trittbretts (3) für das Schließen des einziehbaren Trittbretts (3) erlaubt.

2. Steuervorrichtung nach Anspruch 1, **dadurch gekennzeichnet, dass** der Planetengetriebezug (12) einen frei drehbares Antriebsrad (17) und einen Zahnkranz (16) umfasst, zwischen denen ein Planetenrad (19) und ein mit dem einziehbaren Trittbrett (3) verbundener Planetenradhalter (21) eingesetzt ist und dass der Motor (24) mit einem Zahnrad (25) verbunden ist, das in den Zahnkranz (16) eingreift.

3. Vorrichtung nach Anspruch 2, **dadurch gekennzeichnet, dass** die Vorrichtung ein Blockiermittel umfasst, das ausgebildet ist, um ein Bauteil des Planetengetriebezugs (12) zu blockieren, das zu der Gruppe gehört, die das Antriebsrad (17) und den Kranz (16) umfasst und um die Übertragung der Rotation des Motors (24) auf das einziehbare Trittbrett (3) anhand des Planetengetriebezugs (12) zu erlauben.

4. Vorrichtung nach Anspruch 3, **dadurch gekennzeichnet, dass** das Blockiermittel einen elektromagnetischen Aktuator umfasst, der einen Verriegelungsfinger (27) steuert, der sich auf dem Antriebsrad (17) oder dem Kranz (16) abstützen kann, um deren Rotation zu untersagen.

5. Vorrichtung nach Anspruch 3, **dadurch gekennzeichnet, dass** das Blockiermittel ein Magnetventil umfasst, das ausgebildet ist, um die Rotation des Antriebsrads (17) oder des Kranzes (16) zu blockieren.

6. Vorrichtung nach einem der Ansprüche 1 bis 5, **dadurch gekennzeichnet, dass** sie eine Spiralfeder (30) umfasst, von der ein Ende auf der Vorrichtung befestigt ist und deren anderes Ende auf der Achse des Trittbretts befestigt ist.

7. Vorrichtung nach einem der Ansprüche 1 bis 6, **dadurch gekennzeichnet, dass** sie einen Fettretarder (31) umfasst, der mit einem Zahnrad (32) verbunden ist, das in den Kranz (16) oder in das Antriebsrad (17) eingreift.

8. Vorrichtung nach einem der Ansprüche 1 bis 7, **dadurch gekennzeichnet, dass** sie ein von einem Deckel verschlossenes Gehäuse (14) umfasst, in dem der Planetengetriebezug (12) sowie der Motor (24) untergebracht sind.

9. Vorrichtung nach einem der Ansprüche 1 bis 8, **dadurch gekennzeichnet, dass** die Rotationsachse des einziehbaren Trittbretts (3) von zwei Drehzapfen (9) gebildet wird, die in Bohrungen eingreifen, die in den Einstieg (2) eingearbeitet sind.

10. Steuermodul, **dadurch gekennzeichnet, dass** es ein einziehbares Trittbrett (3) und eine Vorrichtung nach einem der Ansprüche 1 bis 9 umfasst, die es erlaubt, das einziehbare Trittbrett (3) aus seiner geöffneten Stellung in seine Verschlussstellung zu schwenken und Verriegelungsmittel des einziehbaren Trittbretts (3) in Verschlussstellung.

11. Steuermodul eines einziehbaren Trittbretts (3) nach Anspruch 10, **dadurch gekennzeichnet, dass** die Verriegelungsmittel einen Riegel (10) umfassen, der ausgebildet ist, um in eine Raste (11) einzugreifen, die in dem einziehbaren Trittbrett (3) eingearbeitet ist.

12. Steuermodul eines einziehbaren Trittbretts (3) nach Anspruch 10 oder Anspruch 11, **dadurch gekennzeichnet, dass** es Hilfsmittel für das Öffnen des Trittbretts (3) umfasst.

13. Steuermodul eines einziehbaren Trittbretts nach Anspruch 12, **dadurch gekennzeichnet, dass** die Hilfsmittel für das Öffnen des Trittbretts (3) eine Feder umfassen, die das einziehbare Trittbrett (3) in seine geöffnete Richtung beansprucht.

14. Fahrzeug, das ein Fahrerhaus umfasst, das mit mindestens einer Tür (5) und einem Einstieg (2) ausgestattet ist, um in das Fahrerhaus zu gelangen, der sich unter der Tür (5) befindet, **dadurch gekennzeichnet, dass** der Einstieg (2) mindestens ein einziehbares Trittbrett (3) umfasst, das von einer Steuervorrichtung nach einem der Ansprüche 1 bis 9 gesteuert wird.

15. Fahrzeug nach Anspruch 10, **dadurch gekennzeichnet, dass** der Einstieg ein erstes einziehbares Trittbrett umfasst, das von einer Vorrichtung nach einem der Ansprüche 1 bis 9 gesteuert wird und mindestens eine zweites Trittbrett, das mit Hilfe eines Pleuelsystems an das erste einziehbare Trittbrett mechanisch gekoppelt ist.

16. Fahrzeug nach Anspruch 15, **dadurch gekennzeichnet, dass** der Einstieg (2) mindestens zwei übereinandergestellte einziehbare Trittbretter umfasst, wobei das untere einziehbare Trittbrett eine größere Tiefe als das obere einziehbare Trittbrett hat.

## Claims

1. A device for controlling a retractable step (3) for accessing a vehicle, said retractable step (3) comprising an axis of rotation relative to the vehicle so as to allow the retractable step (3) to pivot from a retracted closed position to a deployed open position, **characterized in that** the device comprises an electric motor (24) coupled to the axis of rotation of the retractable step (3) by an epicyclic train (12) allowing kinematic separation of the motor (24) and the retractable step (3) during opening of the retractable step and allowing kinematic coupling of the motor (24) and the retractable step (3) to close the retractable step (3).

2. The control device according to claim 1, **characterized in that** the epicyclic train (12) comprises a freely rotating sun gear (17) and a toothed crown (16) between which a planet gear (19) is inserted, as well as a planet carrier (21) connected to the retractable step (3), and **in that** the motor (24) is connected to a toothed pinion (25) that engages in the toothed crown (16).

3. The device according to claim 2, **characterized in that** the device comprises locking means designed to lock a component of the epicyclic train (12) belonging to the group comprising the sun gear (17) and the crown (16) and to allow the transmission of rotation from the motor (24) to the retractable step (3) through the epicyclic train (12).

4. The device according to claim 3, **characterized in that** the locking means comprise an electromagnetic actuator that controls a locking finger (27) able to bear against the sun gear (17) or the crown (16) to prohibit the rotation thereof.

5. The device according to claim 3, **characterized in that** the locking means comprises a magnetic suction cup designed to lock the rotation of the sun gear (17) or the crown (16).

6. The device according to one of claims 1 to 5, **characterized in that** it comprises a spiral spring (30) whereof one end is fixed on the device and the other end is fixed on the axis of the step.

7. The device according to one of claims 1 to 6, **characterized in that** it comprises a grease retarder (31) connected to a pinion (32) that is meshed in the crown (16) or in the sun gear (17).

8. The device according to one of claims 1 to 7, **characterized in that** it comprises a housing (14) closed by a lid in which the epicyclic train (12) as well as the motor (24) are housed.

9. The device according to one of claims 1 to 8, **characterized in that** the axis of rotation of the retractable step (3) is formed by two journals (9) engaged in piercings formed in the step plate (2).

10. A control module, **characterized in that** it comprises a retractable step (3) and a device according to one of claims 1 to 9 making it possible to pivot the retractable step (3) from its open position to its closed position, and means for locking the retractable step (3) in the closed position.

11. The control module for a retractable step (3) according to claim 10, **characterized in that** the locking means comprise a bolt (10) designed to engage in a strike (11) formed in the retractable step (3).

12. The control module for a retractable step (3) according to claim 10 or claim 11, **characterized in that** it comprises assistance means to assist with opening of the step (3).

13. The control module for a retractable step according to claim 12, **characterized in that** the assistance means to assist with the opening of the step (3) comprise a spring that biases the retractable step (3) in the opening direction thereof.

14. A vehicle comprising a cab equipped with at least one door (5) and a step plate (2) for accessing the cab, situated below the door (5), **characterized in that** the step plate (2) comprises at least one retractable step (3) controlled by a control device according to one of claims 1 to 9.

15. The vehicle according to claim 10, **characterized in that** the step plate comprises a first retractable step controlled by a device according to one of claims 1 to 9 and at least one second step mechanically connected to said first retractable step by a set of link rods.

16. The vehicle according to claim 15, **characterized in that** the step plate (2) comprises at least two superimposed retractable steps, the lower retractable step having a depth greater than that of the upper retractable step.
